# DEMANDE DE BREVET EUROPEEN

(11) **EP 4 563 503 A1**
(43) Date de publication de la demande: **04.06.2025**
(21) Numéro de dépôt: 23383227.8
(22) Date de dépôt: 29.11.2023
(51) Int. Cl.: B65G 47/88, B65G 47/29, B65G 43/08

(54) **SYSTEME DE CONVOYAGE DE PIECES A FABRIQUE**

(71) Demandeur: Fives Conveying Iberica, 47012 Valladolid (ES)
(72) Inventeur: CASTRO, Joan, 47012 Valladolid (ES); RODRIGUEZ, Xavier, 47012 Valladolid (ES)
(74) Mandataire: Fives IP

(57) **Abrégé**

L'invention concerne un système (1) comprenant un convoyeur (2) configuré pour transporter des pièces (3) en direction d'un poste de travail et une zone (4) d'accumulation sur le parcours dudit convoyeur (2) dans laquelle les pièces (3) sont bloquées par des moyens de contrôle qui gèrent le passage des pièces (3) de sorte qu'une seule pièce (3) est transportée à la fois jusqu'au audit poste de travail. Les moyens de contrôle comprennent un premier moyen comportant :
- un support (5) agencé au-dessus du convoyeur (2) dans ladite zone (4) d'accumulation et mobile entre une position haute et une position basse,
- une pluralité de doigts (7) de rétention, portés par ledit support (5) et configurés pour bloquer le passage d'une pièce (3) dans la position basse du support (5) et la libérer dans sa position haute.

L'invention concerne également un procédé et une installation de fabrication utilisant ce système.

## Description

### Domaine technique de l'invention

L'invention concerne le domaine de la fabrication industrielle, en particulier la fabrication de pièces pour l'automobile, telles que des pignons et des crabots, pouvant être utilisés pour des boites à vitesse ou des moteurs.

### Etat de la technique

Le processus de fabrication de telles pièces, par exemple pour boites à vitesse de véhicules, consiste à partir d'une pièce brute à effectuer des étapes automatisées sur différents postes de travail comprenant par exemple des machines d'usinage, des manipulateur et divers traitements, jusqu'à l'obtention de pièces finies.

Pour passer d'un poste de travail à l'autre, les pièces sont généralement transportées par un système de convoyage. Lors de cette opération, il est important d'envoyer les pièces une par une aux machines de sorte qu'une machine ne traite que le nombre nécessaire de pièces à la fois. Pour cela, généralement un système d'arrêt est agencé en amont de chaque poste de travail, il retient les pièces et les envoie aux machines une à la fois.

Un problème se pose lorsque sur la ligne de fabrication on souhaite fabriquer différentes séries de pièces de tailles très différentes. Les systèmes connus nécessitent dans ce cas une mise à point manuelle à chaque fois que la ligne reçoit des pièces de dimension différente. Ceci engendre des arrêts à répétition de la fabrication et en conséquence une baisse de la productivité de la ligne.

L'objectif de la présente invention est de proposer un système convoyage permettant de résoudre les problèmes décrits ci-dessus.

### Résumé de l'invention

A cet effet, l'invention propose un système de convoyage comprenant un convoyeur configuré pour transporter des pièces fabriquées ou à fabriquer en direction d'un poste de travail et une zone d'accumulation, sur le parcours dudit convoyeur, dans laquelle les pièces sont bloquées par des moyens de contrôle, agencés pour gérer le passage des pièces, de sorte qu'une seule pièce est libérée à la fois pour continuer à être transportée par le convoyeur jusqu'au audit poste de travail.

Selon l'invention, les moyens de contrôle comprennent un premier moyen comportant :
- un support agencé au-dessus du convoyeur dans ladite zone d'accumulation, mobile entre une position haute et une position basse,
- une pluralité de doigts de rétention, portés par ledit support et configurés pour bloquer le passage d'une pièce dans la position basse du support et la libérer dans sa position haute.

Le système selon l'invention permet d'effectuer de façon adaptable la fonction d'accumulation et de dosage de pièces de différentes dimensions sans avoir à effectuer des interventions de réglage a chaque changement de dimension des pièces, comme cela est nécessaire dans les installations connues. Ceci permet donc d'économiser considérablement sur le coût d'exploitation de la ligne de fabrication et augmente la productivité.

Par poste de travail on désigne tout poste sur la ligne de fabrication dans lequel les pièces peuvent subir des opérations, telles que de l'usinage, du traitement avec un produit ou juste de la manipulation par un robot.

Avantageusement, les pièces présentant un trou interne, la pluralité de doigts est agencée pour qu'au moins un doigt entre dans le trou d'une pièce dans la position basse du support pour bloquer son passage.

Avantageusement, le système est configuré pour transporter des pièces présentant des dimensions, selon la direction transversale à la direction de déplacement, inférieures à la largeur du convoyeur.

Le système peut par exemple etre configuré pour transporter des pièces présentant une forme sensiblement circulaire ou polygonale. Elles peuvent, par exemple, etre dentée. Elles peuvent en outre etre brute ou partiellement usinées.

A titre d'exemple, les pièces circulaires peuvent avoir un diamètre externe entre 50 mm et 400 mm ou plus, mais inférieure à la largeur du convoyeur. Le système étant conçu pour travailler avec des pièces de différents diamètres simultanément, la largeur du convoyeur est de préférence légèrement supérieure au diamètre de la pièce la plus grande. Le diamètre externe de la pièce la plus petite est de préférence supérieur ou égale à la moitié de la largeur dudit convoyeur, afin d'éviter un passage parallèle de deux pièces en même temps, néanmoins en répartissant la pluralité de doigts sur toute la largeur du convoyeur, des pièces avec des diamètres plus faibles peuvent etre transportées.

Les pièces ayant un trou à l'intérieur dont la dimension peut varier d'une série de pièces à l'autre, on peut avantageusement adapter la largeur des doigts à la dimension minimum.

Alternativement, le système étant flexible, les pièces peuvent etre également arrêtées par l'extérieur.

Avantageusement, la pluralité des doigts est mobile individuellement par rapport au support, entre une position haute de retrait et une position basse d'engagement. Cette mobilité permet d'avoir une flexibilité dans l'engagement et le retrait des doigts, ce qui les protège lors des déplacements du support entre la position basse et la position haute. Ceci protège aussi les pièces d'éventuels dommages dus à un contact avec les doigts.

Avantageusement, la pluralité de doigts peut etre mobiles indépendamment les uns des autres. Ceci permet davantage de flexibilité, par exemple pour s'adapter à la forme d'une grande pièce ou au nombre de pièces à bloquer en parallèles. En effet, selon la forme et la taille de la pièce un doigt ou plus s'engagent dans le trou, alors que les autres sont simplement repoussés par le contact avec la pièce ou bien restent suspendus dans le vide sans contact avec une pièce. Cette flexibilité protège donc davantage les doigts lors du contact avec les pièces et procure une bonne adaptabilité à la forme et au nombre de pièces arrivant au moyen de contrôle.

Selon des exemples de réalisation, les doigts de rétention peuvent faire chacun partie d'une pièce formant sensiblement un L mobile par rotation autour d'un axe du support parallèle à la direction transversale du convoyeur.

Selon d'autres exemples de réalisation, les doigts de rétention peuvent former chacun partie d'une pièce coulissante par rapport au support selon une direction perpendiculaire au convoyeur.

Avantageusement, les moyens de contrôle comprennent en outre un deuxième moyen en forme de butée mobile entre une position d'ouverture autorisant le passage d'une pièce libérée par le premier moyen de contrôle et une position de fermeture empêchant son passage. Ceci permet un meilleur contrôle du passage des pièces vers le poste de travail. En effet, la prochaine pièce à envoyer étant libérée par le premier moyen de blocage, la butée la libère au bon moment alors que le premier moyen bloque toutes les autres pièces.

Avantageusement, le système peut comprendre au moins un détecteur agencé entre le premier et le deuxième moyen de contrôle. Celui-ci permet de détecter la présence d'une pièce entre les deux moyens de blocage avant d'ouvrir le deuxième moyen de contrôle.

Avantageusement, le système peut comprendre un deuxième détecteur positionné avant ou après le deuxième moyen de contrôle. Ce dernier, permet d'envoyer l'information au système de contrôle de l'installation que la pièce a quitté la zone entre les deux moyens de contrôle, ce qui permet par la suite la fermeture du deuxième moyen et l'élévation des doigts du premier moyen pour libérer une nouvelle pièce et engager un nouveau cycle.

Alternativement, en absence de ce deuxième détecteur, l'engagement du nouveau cycle peut se faire en mesurant le temps nécessaire pour que la pièce qui était bloquée par le deuxième moyen puisse passer à l'étape suivante du processus.

L'invention porte également sur une ligne de fabrication de pièces comprenant un système de convoyage de pièces tel que décrit précédemment.

L'invention porte également sur un procédé de fabrication de pièces dans lequel on utilise un système de convoyage tel que décrit ci-dessus pour déplacer des pièces fabriquées ou à fabriquer vers un poste de travail.

### Brève description des figures

D'autres particularités et avantages de l'invention apparaîtront encore dans la description qui va suivre en relation avec les dessins annexés, donnés à titre d'exemples non limitatifs dans lesquels :
[Fig.1] la figure 1 est une vue schématique globale d'un exemple de système selon l'invention ;
[Fig.2] la figure 2 est une vue de côté du système de la figure 1 ;
[Fig.3] la figure 3 est une vue de face du système de la figure 1;
[Fig.4] la figure 4 montre un cas d'application du système de la figure 1.

### Description détaillée de l'invention

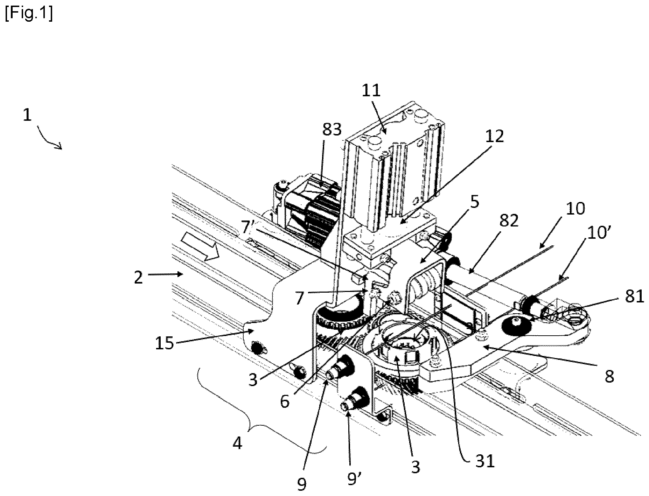

Sur la figure 1 est représenté schématiquement et partiellement un système 1 selon l'invention. Le système 1 comprend un convoyeur 2 pour transporter des pièces 3 en cours de fabrication. Les pièces 3 ici sont circulaires, mais d'autres formes sont possibles, par exemple carré, ovale ou hexagonale. Elles peuvent de préférence avoir un trou central 31 apte à recevoir un doigt 7 de rétention.

Les pièces 3 peuvent arriver dans un état brut ou partiellement usinées pour etre transportées par le convoyeur 2 vers un prochain poste de travail non représenté sur la figure 1. Elles arrivent ensuite dans une zone d'accumulation 4 dans laquelle elles sont bloquées par des moyens de contrôle qui sont configurés pour permettre le passage des pièces 3 une par une vers le poste de travail.

Un premier moyen de contrôle comprend un support 5 agencé dans la zone 4 au-dessus du convoyeur 2, porté par un châssis 15 comme dans l'exemple ou par un autre moyen. Il peut etre porté par un moyen suspendu dans d'autres exemples non représentés.

Le support 5 est agencé pour etre déplacé verticalement par un ensemble moteur 11, 12 entre une position haute et une position basse. L'élément 12 peut etre un vérin déplacé par le moteur 11 pour déplacer le support 5 entre les deux positions.

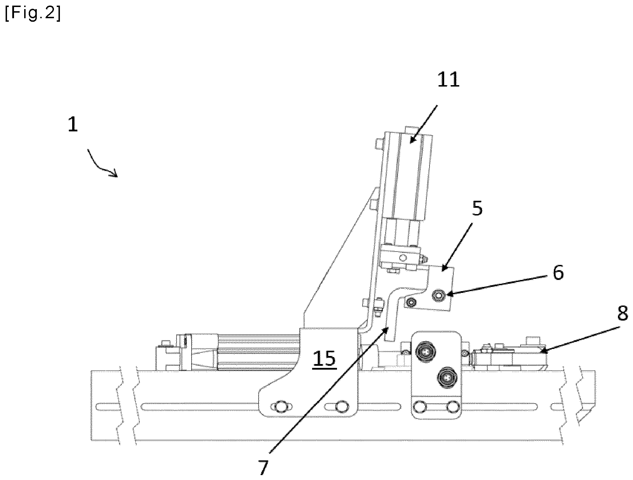

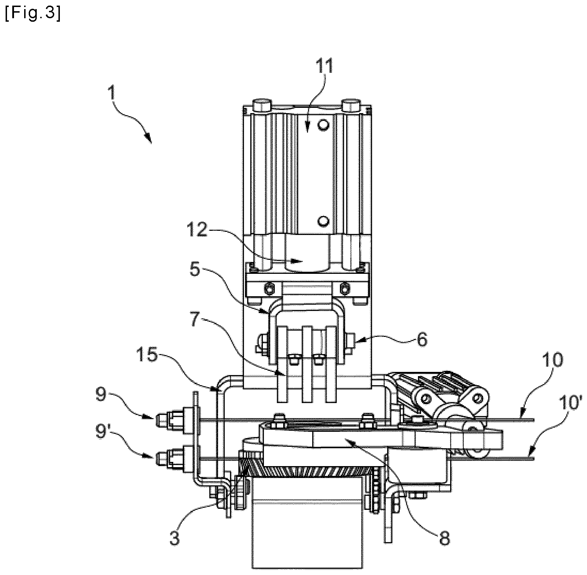

Le support 5 porte un ensemble de doigts 7 de retentions sur les figures 2 et 3. Dans l'exemple de la Figure 3 il y a 3 doigts qui font parties chacun d'une pièce 7' en forme de L qui sont reliés au support 5 par un axe 6 transversal. Dans ce cas les doigts font un mouvement rotatif autour de l'axe 6 lorsque le support 5 descend ou remonte. Ils peuvent etre mécanisés ou juste suspendus sous l'effet de leur poids.

Selon une variante non représentée, les doigts de rétention peuvent former chacun partie d'une pièce coulissante par rapport au support selon une direction perpendiculaire au convoyeur.

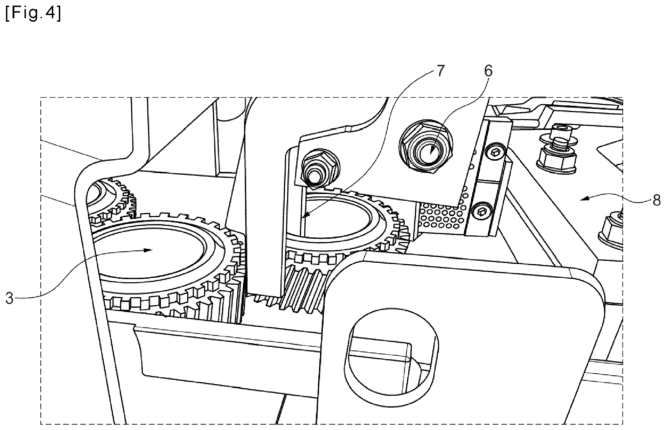

Les moyens de contrôle comprennent en outre un deuxième moyen en forme de butée 8 mobile entre une position d'ouverture autorisant le passage d'une pièce 3 libérée par les doigts 7 et une position de fermeture empêchant son passage. En effet, pour permettre une bonne gestion des pièces arrivant au poste de travail, une pièce est d'abord libérée par les doigts du premier moyen de contrôle. Celle-ci est alors bloquée par la butée jusqu'au moment où une place est libérée au niveau du poste de travail, elle est alors libérée, alors que les doigts du premier moyen de contrôle bloquent la pièce suivant comme cela est visible dans l'exemple de la figure 4. Ceci permet à la butée d'ouvrir le passage et de le refermer en laissant passer uniquement la pièce déjà libérée des doigts 7. Une fois que la butée 8 est refermée, la pièce suivante est à son tour libérée pour aller au contact de la butée 8 qui autorisera son passage lorsqu'une place est libre au poste de travail. En répétant ainsi l'opération, le passage des pièces est géré de façon efficace en laissant passer une à la fois et ceci pour une variété de dimensions de pièces. L'ouverture et la fermeture de la butée 8 est gérée par le moteur 83 qui déplace le vérin 82 engendrant l'ouverture et la fermeture par rotation autour de l'axe 81.

Avantageusement, pour permettre une meilleure gestion des pièces, le système peut comprendre un détecteur 9 agencé entre le premier moyen de contrôle 7 et le deuxième moyen de contrôle 8 pour détecter la présence d'une pièce entre les deux moyens 7, 8. La référence 10 indique l'axe du détecteur.

Avantageusement, le système peut comprendre un deuxième détecteur 9' (axe 10') agencé pour envoyer l'information au système de contrôle informatique que la pièce a quitté la zone entre les deux moyens de contrôle7, 7, ce qui permettra par la suite la fermeture de la butée avant l'élévation des doigts 7 du premier moyen pour engager un nouveau cycle.

## Revendications

1. Système (1) de convoyage comprenant un convoyeur (2) configuré pour transporter des pièces (3) fabriquées ou à fabriquer en direction d'un poste de travail et une zone (4) d'accumulation sur le parcours dudit convoyeur (2) dans laquelle les pièces (3) sont bloquées par des moyens de contrôle agencés pour gérer le passage des pièces (3) de sorte qu'une seule pièce (3) est libérée à la fois pour continuer à être transportée par le convoyeur (2) jusqu'au audit poste de travail, **caractérisé en ce que** les moyens de contrôle comprennent un premier moyen comportant :
- un support (5) agencé au-dessus du convoyeur (2) dans ladite zone (4) d'accumulation, mobile entre une position haute et une position basse,
- une pluralité de doigts (7) de rétention, portés par ledit support (5) et configurés pour bloquer le passage d'une pièce (3) dans la position basse du support (5) et la libérer dans sa position haute.

2. Système (1) selon la revendication précédente dans lequel, les pièces présentant un trou (31) interne, la pluralité de doigts (7) est agencée pour qu'au moins un doigt entre dans le trou d'une pièce dans la position basse du support (5) pour bloquer son passage.

3. Système (1) selon l'une des revendications précédentes configuré pour transporter des pièces (3) présentant des dimensions, selon la direction transversale à la direction de déplacement, inférieures à la largeur du convoyeur (2).

4. Système (1) selon la revendication précédente, configuré pour transporter des pièces présentant une forme sensiblement circulaire ou polygonale.

5. Système (1) selon l'une des revendications précédentes, dans lequel la pluralité de doigts (7) est mobile individuellement par rapport au support (5), entre une position haute de retrait et une position basse d'engagement.

6. Système (1) de convoyage selon la revendication précédente dans lequel les doigts (7) de rétention font chacun partie d'une pièce formant sensiblement un L, mobile par rotation autour d'un axe (6) du support (5) parallèle à la direction transversale au convoyeur (2).

7. Système de convoyage selon l'une des revendications 1 à 5 dans lequel les doigts de rétention forment chacun partie d'une pièce coulissante par rapport au support selon une direction perpendiculaire au convoyeur.

8. Système (1) de convoyage selon l'une des revendications précédentes, dans lequel les moyens de contrôle comprennent en outre un deuxième moyen en forme de butée (8) mobile entre une position d'ouverture autorisant le passage d'une pièce libérée par le premier moyen (7) de contrôle et une position de fermeture empêchant son passage.

9. Système (1) selon la revendication précédente comprenant au moins un détecteur (9) agencé entre le premier moyen de contrôle (7) et le deuxième moyen de contrôle (8).

10. Installation de fabrication comprenant un système (1) de convoyage de pièces (3) selon l'une des revendications précédentes.

11. Procédé de fabrication de pièces dans lequel on utilise un système de convoyage selon l'une des revendications 1 à 9 pour déplacer des pièces (3) fabriquées ou à fabriquer vers un poste de travail.
